Europäisches Patentamt

European Patent Office

Office européen des brevets

(11) Publication number: **0 279 001 B1**

# EUROPEAN PATENT SPECIFICATION

(45) Date of publication of patent specification: **14.04.93**

(51) Int. Cl.⁵: **C08J 5/24**, C08G 59/06, H05K 1/03

(21) Application number: **87102250.5**

(22) Date of filing: **17.02.87**

(54) **Laminates.**

(43) Date of publication of application:
**24.08.88 Bulletin 88/34**

(45) Publication of the grant of the patent:
**14.04.93 Bulletin 93/15**

(84) Designated Contracting States:
**AT CH DE FR GB LI NL**

(56) References cited:
**EP-A- 0 159 482**
**DE-A- 2 405 037**
**GB-A- 1 024 288**
**US-A- 3 413 248**
**US-A- 4 394 497**

(73) Proprietor: **THE DOW CHEMICAL COMPANY**
**2030 Dow Center Abbott Road P.O. Box 1967**
**Midland Michigan 48640-1967(US)**

(72) Inventor: **Bogan, Gary W.**
**242 Corkwood**
**Lake Jackson Texas 77566(US)**
Inventor: **Lucas, Peter A.**
**414 North Broad Street**
**Allentown, PA.18104(US)**
Inventor: **Monnerat, Georgia A.**
**303 Caladium**
**Lake Jackson Texas 77566(US)**
Inventor: **Aldrich, Dale J.**
**62 Daffodil Court**
**Lake Jackson Texas 77566(US)**

(74) Representative: **Sternagel, Hans-Günther, Dr.**
**et al**
**Patentanwälte Dr. Michael Hann Dr. H.-G.**
**Sternagel Sander Aue 30**
**W-5060 Bergisch Gladbach 2 (DE)**

## Description

The present invention pertains to laminates, particularly electrical laminates.

US-A-4,394,497 discloses solid compositions prepared by reacting (A) one or more materials containing an average of more than one 1,2-epoxy groups with (B) one or more materials containing an average of more than one phenolic hydroxy groups wherein at least one of (A) or (B) contains with respect to (B) or has been prepared from with respect to (A) a reaction product of (1) at least one aromatic compound having at least one aromatic ring, at least one aromatic hydroxyl group and which aromatic ring contains at least one ortho- or para position which is capable of being alkylated and (2) at least one aliphatic or cycloaliphatic $C_4$ to $C_6$ unsaturated hydrocarbon or a dimer, codimer, oligomer or cooligomer thereof. The working examples of this document only illustrate such solid compositions. These solid epoxy resins are characterized by their softening point in the range of 117.2°C to 137.7°C and their viscosity data.

EP-A-0 159 482 discloses a fiber resin matrix composite comprising reinforcing filaments, a heat curable epoxy resin composition comprising an epoxy prepolymer or combination of prepolymers having more than one epoxide group per molecule, an amount effective to promote cure of the amine functional curing agent and a heat resistant and moisture resistant modifying resin component blended and alloyed with said epoxy prepolymer and said curing agent in an amount at least sufficient to control the tack of the composite but in excess of an amount which decreases the flow of said heat curable epoxy resin composition below a level which adversely affects the resin density in the composite.

GB-A-1,024,288 discloses a process for producing shaped articles which comprise reacting a phenol or a etherified phenol containing at least one free phenolic hydroxyl group per molecule and a long chain halogenated paraffin containing at least 2 halogen atoms and 10 to 40 carbon atoms and having a halogen content of from 10 to 50 percent by weight at a temperature from 120 to 200°C in the presence of zinc or an acid catalyst, further reacting the resulting haloalkylation product with epichlorhydrin or dihalohydrin at a temperature from 80 to 120°C in she presence of a basic catalyst and curing the resulting glycidyl esters by reacting with a curing agent

Laminates have previously been prepared from bisphenol A based epoxy resins. It is known that the properties of a laminate can be improved by employing multifunctional epoxy novolac resins in the formulations. It is also known that just as significant as the improvements in laminate properties is the detrimental effect that multifunctional epoxy resins have on processability. The tris(hydroxyphenyl)methane, tetra(hydroxyphenyl)ethane and phenolformaldehyde epoxy novolac resins have been unsuccessful toward this end because to achieve a glass transition temperature (Tg) of 150°C or higher, when cured with dicyandiamide, requires sufficient quantities of the multifunctional epoxy resin to have adverse effects in the following areas: (1) varnish reactivity, (2) prepreg reactivity, (3) prepreg cosmetics, (4) reinforcement wetability, (5) laminate pressing, (6) laminate post cure requirement and (7) blister resistance of the laminate.

The object of the present invention is to provide a laminate by curing a curing composition comprising at least an epoxy resin, at least one reinforcing material and at least one curing agent for said epoxy resin having both improved physical properties and an improved processability.

This object is attained by a laminate having a Tg of at least 150°C prepared by curing a composition comprising

(A) at least one reinforcing fiber material;

(B) at least one epoxy resin; and

(C) at least one curing agent for component (B); employing as at least a part of component (B) at least one hydrocarbon-phenol epoxy resin, halogenated hydrocarbon-phenol epoxy resin or combination thereof in an amount such that at least 40 percent of the epoxy groups present in component (B) are contributed by said hydrocarbon-phenol epoxy resin, halogenated hydrocarbon-phenol epoxy resin or combination thereof,

**characterized in that**

component (B) is

(i) the product resulting from dehydrohalogenating the reaction product of an epihalohydrin and the product resulting from reacting phenol, cresol or a combination thereof with a composition comprising from 70 to 100 percent by weight of dicyclopentadiene, from zero to 30 percent by weight of $C_{10}$ dimers, from zero to 7 percent by weight of oligomers of $C_4$-$C_6$ unsaturated hydrocarbons and the balance if any to provide 100 percent by weight of $C_4$-$C_6$ alkanes, alkenes or dienes;

(ii) halogenated derivatives of the product of component (i); or

(iii) combinations thereof.

It has now been found that the deficiencies mentioned before can be overcome by the use of hydrocarbon-phenol epoxy resins. They not only provide the electrical laminates prepared therefrom an improvement in electrical and moisture resistance properties, but they also provide an improvement in one or more of the above enumerated deficiencies.

Suitable hydrocarbon-phenol epoxy resins which can be employed herein include those disclosed by Vegter et al in U.S -A- 3,536,734, by Nelson in U S -A- 4,390,680 and Nelson et al in U S -A- 4,394,497. Particularly suitable hydrocarbon-phenol epoxy resins include those prepared by dehydrohalogenating the reaction product of an epihalohydrin and the reaction product of an aromatic hydroxyl-containing compound with an unsaturated hydrocarbon having from 4 to 55 carbon atoms. Suitable aromatic hydroxyl-containing compounds which can be employed herein include any such compounds which contain one or two aromatic rings, at least one phenolic hydroxyl group and at least one ortho or para ring position with respect to a hydroxyl group available for alkylation.

Particularly suitable aromatic hydroxyl-containing compounds which can be employed herein include, for example, phenol, chlorophenol, bromophenol, methylphenol, hydroquinone, catechol, resorcinol, guaiacol, pyrogallol, phloroglucinol, isopropylphenol, ethylphenol, propylphenol, t-butylphenol, isobutylphenol, octylphenol, nonylphenol, cumylphenol, p-phenylphenol, o-phenylphenol, m-phenylphenol, bisphenol A, dihydroxydiphenyl sulfone, or mixtures thereof.

Suitable unsaturated hydrocarbons which, either in a crude or purified state, can be employed herein include, for example, butadiene, isoprene, piperylene, cyclopentadiene, cyclopentene, 2-methylbutene-2, cyclohexene, cyclohexadiene, methyl cyclopentadiene, dicyclopentadiene, limonene, dipentene, linear and cyclic dimers of piperylene, methyl dicyclopentadiene, dimethyl dicyclopentadiene, norbornene, norbornadiene, ethylidine norbornene, and mixtures thereof. Also suitable unsaturated hydrocarbons include the other dimers, codimers, oligomers and cooligomers of the aforementioned unsaturated hydrocarbons. The suitable unsaturated hydrocarbons which are employed herein are a dicyclopentadiene concentrate containing from 70 to 100 percent by weight of dicyclopentadiene; from 0 to 30 percent by weight of $C_{10}$ dimers, for example, cyclopentadieneisoprene, cyclopentadienepiperylene, cyclopentadienemethyl cyclopentadiene, and/or dimers of isoprene, piperylene, methyl cyclopentadiene; from zero to 7 percent by weight of $C_4$-$C_6$ dienes and the balance to provide 100 percent, $C_4$-$C_6$ alkanes, alkenes and dienes.

Methods of preparation for these dicyclopentadiene concentrates and more detailed descriptions thereof can be found collectively in U S -A- 3,557,239 issued to Gebhart et al and U S -A- 4,167,542 issued to Nelson.

These hydrocarbon-phenol epoxy resins can be employed alone or in admixture with other epoxy resins such as the diglycidyl ethers of dihydric phenols such as, for example, resorcinol, catechol, hydroquinone, bisphenol A, bisphenol F, dihydroxybiphenyl, and mixtures thereof. Also suitable are the polyglycidyl ethers of phenolic materials having more than two hydroxyl groups such as, for example, tris(hydroxyphenyl)-methane, tetra(hydroxyphenyl)ethane, phenolaldehyde novolacs, and mixtures thereof. Also suitable as additional epoxy resins are the halogenated derivatives, particularly the brominated derivatives of the aforementioned epoxy resins.

Suitable curing agents which can be employed herein include, for example, amines, acids or anhydrides thereof, biguanides, imidazoles, urea-aldehyde resins, melamine-aldehyde resins, phenolics, halogenated phenolics, combinations thereof and the like. These and other curing agents are disclosed in Lee and Neville's Handbook of Epoxy Resins, McGraw-Hill Book Co., 1967. Particularly suitable curing agents include, for example, dicyandiamide, diaminodiphenylsulfone, 2-methylimidazole, diethylene-toluenediamine, bisphenol A, tetrabromobisphenol A, phenol-formaldehyde novolac resins, halogenated phenol-formaldehyde resins, hydrocarbon-phenol resins and combinations thereof.

Suitable reinforcing materials which can be employed herein include, for example, fiberglass, aromatic polyamides, aramid resins, carbon, graphite, quartz, synthetic fibers, and combinations thereof. The reinforcing materials can be woven, matt, filament or in the form of random fibers.

Suitable catalysts or promoters or accelerators which can be employed in the preparation of the prepreg materials from which the laminates are prepared include, for example, tertiary amines, imidazoles, phosphonium compounds, ammonium compounds, sulfonium compounds, and mixtures thereof.

Suitable tertiary amines include, for example, triethylenediamine, N-methylmorpholine, triethylamine, tributylamine, benzyldimethylamine, tris(dimethylamino-methyl)phenol, and mixtures thereof.

Suitable imidazoles include, for example, 2-methylimidazole, 1-propylimidazole, and mixtures thereof.

Suitable phosphonium compounds include, for example, those disclosed by Dante et al in U S -A-3,477,990, Perry in CA-A-893,191 and U S -A-3,948,855 and by Tyler, Jr. et al in U S-A-4,366,295.

Suitable quaternary ammonium compounds include, for example, benzyl trimethyl ammonium chloride, benzyl trimethyl ammonium hydroxide, tetrabutyl ammonium chloride, tetrabutyl ammonium hydroxide, and mixtures thereof.

Suitable solvents which can be employed to prepare the electrical laminates include, for example, glycol ethers, ketones, aromatic hydrocarbons, alcohols, amides, and combinations thereof. Particularly suitable solvents include, for example, methyl ethyl ketone, acetone, methanol, dimethylformamide, ethylene glycol methyl ether, propylene glycol methyl ether, and combinations thereof.

The laminates of the present invention are suitable for use in electrical applications, structural laminates or composites. They are particularly suitable for use in the manufacture of printed circuit boards.

The printed circuit boards, of course, have an outer layer of an electrical conductive material such as copper, gold, silver and platinum.

The following examples are illustrative of the invention, but are not to be construed as to limiting the scope thereof in any manner.

Epoxy Resin A is a phenol-formaldehyde epoxy novolac resin having an average functionality of 3.8 and an epoxide equivalent weight, EEW, of 200.

Epoxy Resin B is a glycidyl ether of tris(hydroxyphenyl)methane novolac (the reaction product of hydroxybenzaldehyde with phenol in a molar ratio of 1 to 4 respectively) having an average functionality of 5.9 and an epoxide equivalent weight, EEW, of 218.

Epoxy Resin C is the glycidyl ether of the reaction product of phenol and a dicyclopentadiene concentrate consisting of 83% DCPD, 1.4% non-reactive light hydrocarbons, and the remainder being primarily a mixture of codimers of $C_4$-$C_6$ dienes. This resin has an average functionality of 3.2 and an epoxide equivalent weight, EEW, of 279.

Resin Varnish Preparation Procedure

In the Example and Comparative Experiments, the resin varnish was prepared from the indicated formulation in the following manner.

The indicated amount of epoxy resin solution was blended with the indicated amount of dicyandiamide solution. 2-Methylimidazole was added, if necessary, to adjust the varnish reactivity to approximately 200 seconds by stroke cure gel time. Additional acetone was added, if necessary, to bring the overall varnish viscosity to 21 seconds by a #2 Zahn cup.

The tests were performed according to the following procedures. The relative blister resistance was determined by placing three 50.8 mm x 101.6 mm (2" x 4") unclad laminate coupons in a pressure pot at 103 kPa (15 psi) steam for 60 minutes and 120 minutes. After this time the coupons were removed, externally dried and dipped in molten solder at 260°C (500°F) for 20 seconds. Each side of the 3 coupons was then inspected for any delamination blisters. The results were reported as the percent of number of sides with no blisters. Degrees of cure were measured by glass transition temperatures and/or exotherms as evidenced on a DuPont 1090 Thermal Analyzer with a 910 Differential Scanning Calorimeter (DSC). All gel times were measured by stroke cure on a 171°C hot plate.

The resin flow is a measure of the amount of resin that will be expelled during a pressing operation. The % flow is measured by the following procedure:

1. cut six 152.4 mm x 152.4 mm (6" x 6") squares of prepreg;
2. stack the 6 pieces and weigh to the nearest ±.01 gram;
3. put the stack between caul plates and place into a preheated press at 171.1°C (340°F) and apply a pressure of 1379 kPa (200 psi),
4. leave in the press for at least 10 minutes;
5. remove the pressed laminate and cut into a 101.6 mm x 101.6 mm (4" x 4") piece;
6. weigh the 101.6 mm x 101.6 mm (4" x 4") piece to the nearest ±.01 gram; and
7. the following calculation is used to determine % flow:

$$\% \text{ flow} = \frac{\text{initial weight}/2 - \text{final weight}}{\text{initial weight}/2}$$

## COMPARATIVE EXPERIMENT A

### A. Formulation

A varnish was prepared employing the aforementioned procedure employing the following formulation.

4292 grams (18.241 equiv.) of an 85% by weight solution of Epoxy Resin A in methyl ethyl ketone.

2287 grams (10.95 equiv.) of a 10% by weight solution of dicyandiamide in a 50/50 by weight solvent blend of dimethylformamide and propylene glycol methyl ether.

500 grams of acetone to adjust solution viscosity.

### B. Preparation of Preimpregnated Substrate

Burlington style 7628 glass cloth with an I-617 finish was impregnated with the above varnish formulation. The impregnation was done in a forced air vertical treater having a total length of (36 feet) 10.97 m . The first 8.23 m (27 feet) were heated to 176.7°C (350°F). The last 2.74 m (9 feet) were not heated. The treater was operated at rates of 55.88, 66.04, 76.2 and 86.36 mm/s (11, 13, 15 and 17 feet per minute). The resultant preimpregnated glass cloth had a gel time of 124 seconds except for the one prepared at 55.88 mm/s (11 ft./min.) which gelled (0 gel time). The resin content of the impregnated glass cloth was 37% by weight.

### C. Preparation of Laminate

A-single opening Wabash press was preheated to 176.7°C (350°F). Eight plys of 304.8 mm x 304.8 mm (12" x 12") preimpregnated glass cloth prepared in (B) above was placed between 2 steel plates and Teflon pads. The above lay-up was placed into the press and a minimal amount of pressure, 206.844 kPa (30 psig) was applied to help control the laminate thickness and resin flow. At 5 minutes, the pressure was increased gradually to 3447.4 kPa (500 psig).

The results were as follows: (1) The varnish gel time was 124 seconds. This is considerably faster than the typical 200 second gel time especially since there was no accelerator (2-methylimidazole) added. (2) The prepreg cosmetics (uniformity of resin coating on the glass) was in all instances very poor. The surface was very rough and mottled. (3) The impregnation of the glass (wetability) was very poor. If properly wet out, the prepreg should be translucent. In this instance, the prepreg was virtually opaque. (4) The excessive resin flow during lamination, even with an initial low pressure period, caused resin starved areas in the laminate. (5) The very rapid build in viscosity as evidenced by the dynamic mechanical spectroscopy (DMS) curves caused considerable air entrapment in the laminate. (6) During the typical 1 hour , 3447.4 kPa (500 psig) press cycle at 176.7°C (350°F) the laminate did not reach full cure. Even after a post bake cycle of 16 hours at 175°C, the laminate was still not fully cured. (7) A blister resistance test of 60 and 120 minutes exposure to 103.4 kPa (15 psig) steam followed by immersion in 260°C (500°F) solder for 20 seconds was conducted and at 60 min., 50% of the samples passed and at 120 min., none of the samples passed. (8) The dielectric constant was 5.64 and the dissipation factor was 0.0080.

## COMPARATIVE EXPERIMENT B

### A. Preparation of Varnish

A varnish was prepared employing the procedure in part A of Comparative Experiment A employing the following formulation.

4301 grams (13.81 equiv.) of a 70% by weight solution of Epoxy Resin B in methyl ethyl ketone.

1740 grams (8.9 equiv.) of a 10% by weight solution of dicyandiamide in a 50/50 by weight solvent blend of dimethylformamide and propylene glycol methyl ether.

No acetone was added, as no viscosity adjustment was required.

### B. Preparation of Preimpregnated Substrate

The same glass cloth, vertical treater and treater conditions were employed in this experiment as in part B of Comparative Experiment A. The treater was operated at 81.28 mm/s (16 feet per minute). The resultant preimpregnated glass cloth had a gel time of 92 seconds. The resin content was 41% by weight.

### C. Preparation of Laminate

The same press conditions and press cycle were employed in this experiment as in part C of Comparative Experiment A. The results were as follows: (1) The gel time of the varnish from which the laminate was prepared was 147 seconds. This is considerably faster than the typical 200 second gel time, especially since there was no accelerator (2-methylimidazole) present. (2) The prepreg cosmetics were very poor. The surface was very rough and mottled. (3) The wet-out of the glass cloth was very poor. The prepreg was virtually opaque. (4) The excessive resin flow even during the low pressure cycle caused resin starved areas. (5) The rapid build in viscosity near the gel point (similar to that of Comparative Experiment A) as evidence by the DMS curves caused considerable air entrapment in the laminate. (6) During the typical 1 hour, 3447.4 kPa (500 psig), press cycle at 176.7°C (350°F), the laminate did not reach full cure as evidenced by an exotherm at 205°C during DSC analysis. Even after a 16 hour post cure at 175°C, the laminate exothermed at 220°C again indicating an incomplete cure. (7) A blister resistance test of 60 and 120 minutes exposure to 103.4 kPa (15 psig) steam followed by immersion in 260°C (500°F) solder for 20 seconds was conducted and at 60 min., 100% of the samples passed and at 120 min., none of the samples passed.

### EXAMPLE 1

#### A. Preparation of Varnish

A varnish was prepared employing the procedure part A of Comparative Experiment A employing the following formulation.

4939 grams (14.15 equiv.) of an 80% by weight solution of Epoxy Resin C in acetone.

1782 grams (8.49 equiv.) of a 10% by weight solution of dicyandiamide in a 50/50 by weight solvent blend of dimethylformamide and propylene glycol methyl ether.

2.77 grams of 2-methylimidazole to adjust the reactivity.

400 grams of acetone were added to adjust the solution viscosity.

#### B. Preparation of Preimpregnated Substrate

The same glass cloth, vertical treater and treater conditions were employed in this experiment as in part B of Comparative Experiment A. The treater was operated at 43.18 mm/s (8.5 feet per minute). The resultant preimpregnated glass cloth had a gel time of 150 seconds. The resin content was 40% by weight.

#### C. Preparation of Laminate

The same press conditions and press cycle were employed in this example as in part C of Comparative Experiment A. The results were as follows: (1) The varnish formulation was accelerated with 2-imidazole to obtain the typical 200 second gel time. (2) The prepreg cosmetics were excellent. The surface was very smooth and even. (3) The wetability of the glass cloth was very good. The prepreg was translucent which is indicative of good wet-out. (4) There were no resin starved areas on the laminate even though the prepreg had a longer gel time than that of Comparative Experiment A. (5) There was no air entrapped in the laminate. (6) Full cure of the laminate was achieved in the 1 hour press cycle. The glass transition temperature (Tg) was 185°C as determined by DSC, differential scanning calorimetry. Following a 16 hour post cure at 175°C, there was no significant increase in the Tg indicating that full cure is achieved in the 1 hour press cycle. (7) A blister resistance test of 60 and 120 minutes exposure to 103.422 (15 psig) kPa steam followed by immersion in 260°C (500°F) solder for 20 seconds was conducted and at 60 min., 83% of the samples passed and at 120 min., 83% of the samples passed. (8) The dielectric constant was 4.75 and the dissipation factor was 0.00696.

The results of Comparative Experiments A and B and Example 1 are tabulated in the following table.

| | Comparative Experiments | | Example |
|---|---|---|---|
| | A | B | 1 |
| Varnish Reactivity, seconds | 124 | 147 | 200 |
| Prepreg Reactivity, seconds | 124 | 92 | 150 |
| Prepreg Appearance | Poor | Poor | Excellent |
| Glass Wetability | Poor | Poor | Excellent |
| Resin Flow, % | 60 | 50 | 25 |
| Blister Resistance (120 min.) % Sides with no blisters | 0 | 0 | 83 |
| Dielectric Constant @ 1 KHZ | 5.64 | 5.25 | 4.75 |
| *Residual Exotherm (after 16 hours @ 175°C) | Yes | Yes | No |
| **Amount of 2-methylimidazole required for reactivity adjustment | 0 | 0 | 2.77 |

*Residual exotherm is an indication that the reaction mixture was not totally cured, i.e. a reaction was still taking place.
**Amount of 2-methylimidazole required to adjust the reactivity so that the gel time of the reaction mixture was approximately 200 seconds.

## EXAMPLE 2

### A. Preparation of Varnish

A varnish was prepared employing the procedure of Comparative Experiment A, Part A from the following components.

124 grams (0.46 epoxy equiv.) of Epoxy Resin C.

44 grams (0.16 phenolic hydroxyl equiv.) of tetrabromobisphenol A.

62 grams (0.35 phenolic hydroxyl equiv.) of a novolac resin prepared by reacting phenol with a mixture consisting of 83% dicyclopentadiene, 1.4% non-reactive light hydrocarbons and the remainder being primarily a mixture of codimers of $C_4$-$C_6$ dienes. This resin had an average functionality of 3.2 and a phenolic hydroxyl equivalent weight of 176.9.

0.35 grams of 2-methyl imidazole.

92 grams of acetone.

31 grams of propylene glycol methyl ether.

### B. Preparation of Preimpregnated Substrate.

Strips of 152.4 mm (6 in.) wide 7628 style fiberglass cloth were dipped into the above solution and dried in a forced draft oven at 176.6°C (350°F) for 90 s . The resultant preimpregnated substrate material contained 41.8% resin, 58.2% glass and had a gel time of 131 seconds at 345°C.

### C. Preparation of Laminate

Eight layers of the above preimpregnated substrate material were pressed in an electrically heated press under the following conditions, each step being sequential:

26.7°C (80°F) to 143.3°C (290°F) at 0.11 °C/s (12°F/min) at 241.3 kPa (35 psig);

143.3°C (290°F) to 176.7°C (350°F) at 0.11 °C/s. (12°F/min), and the pressure increased to 3102.7 kPa (450 psig) at a rate of 16.09 kPa/s (140 psig/min);

maintained at 176.7°C (350°F) and 3102.7 kPa (450 psig) for 90 min.

cooled from 176.7°C (350°F) to 65.6°C (150°F) at -0.185°C/s (-20°F/min). and a pressure of 3102.7 kPa (450 psig).

The press was then opened and the laminate removed. The laminate had the following properties.

| Glass transition temp. (heated at 20°C/min) | 167°C. |
|---|---|
| Thickness | 147 mm (58 mils) Resin |
| Flow | 8% |
| Uniformly translucent over entire area. Dielectric constant at 100 KHz | 4.5 |

EXAMPLE 3

A. Preparation of Varnish

A varnish was prepared employing the procedure of Compartive Experiment A, Part A employing the following components.

121 grams (0.45 epoxy equiv.) of Epoxy Resin C.

50.6 grams (0.19 phenolic hydroxyl equiv.) of tetrabromobisphenol A.

24.5 grams (0.22 phenolic hydroxyl equiv.) of phenol-formaldehyde novolac resin having an average functionality of 5 and a phenolic hydroxyl equivalent weight of 110.

0.3 grams of 2-methyl imidazole.

112 grams of acetone.

2.5 grams of propylene glycol methyl ether.

B. Preparation of Preimpregnated Substrate.

Strips of 152.4 mm (6 in.) wide 7628 style fiberglass cloth were dipped into the above solution and dried in a forced draft oven at 176.6°C (350°F) for 90 s . The resultant preimpregnated substrate material contained 42.4% resin, 57.6% glass and had a gel time of 107 seconds at 345°C.

C. Preparation of Laminate

Eight layers of the above preimpregnated substrate material were pressed in an electrically heated press under the following conditions, each step being sequential:

26.7°C (80°F) to 135°C (275°F) at (12°F/min) 0.11 °C/s . at 241.3 kPa (35 psig);

135°C (275°F) to 176.7°C (350°F) at 0.11 °C/s (12°F/min). and the pressure increased to 2413.2 kPa (350 psig) at a rate of 18.39 kPa/s (160 psig/min) ; maintained at 176.7°C (350°F) and 2413.2 kPa (350 psig) for 90 min.

176.7°C (350°F) to 65.6°C (150°F) at -0.185°C/s (-20°F/min) and a pressure of 2413.2 kPa (350 psig) ;

The press was then opened and the laminate removed. The laminate had the following properties.

| Glass transition temp. (heated at 20°C/min) | 175°C. |
|---|---|
| Thickness | 1.47 mm (58 mils) |
| Resin Flow | 8%. |

Uniformly translucent over entire area.

| Dielectric constant at 100 KHz | 4.6. |
|---|---|
| Blister resistance | 66.6%. |

## Claims

1. A laminate having a Tg of at least 150°C prepared by curing a composition comprising

(A) at least one reinforcing fiber material;

(B) at least one epoxy resin; and

(C) at least one curing agent for component (B); employing as at least a part of component (B) at least one hydrocarbon-phenol epoxy resin, halogenated hydrocarbon-phenol epoxy resin or combination thereof in an amount such that at least 40 percent of the epoxy groups present in

EP 0 279 001 B1

component (B) are contributed by said hydrocarbon-phenol epoxy resin, halogenated hydrocarbon-phenol epoxy resin or combination thereof,
**characterized in that**
component (B) is

(i) the product resulting from dehydrohalogenating the reaction product of an epihalohydrin and the product resulting from reacting phenol, cresol or a combination thereof with a composition comprising from 70 to 100 percent by weight of dicyclopentadiene, from zero to 30 percent by weight of $C_{10}$ dimers, from zero to 7 percent by weight of oligomers of $C_4$-$C_6$ unsaturated hydrocarbons and the balance if any to provide 100 percent by weight of $C_1$-$C_6$ alkanes, alkenes or dienes;

(ii) halogenated derivatives of the product of component (i); or

(iii) combinations thereof.

2. A laminate of claim 1 wherein
   component (A) is fiberglass or an aromatic polyamide; and
   component (C) is an amine, a biguanide or a phenolic material.

3. A laminate of claim 2 wherein component (C) is dicyandiamide, diamindiphenylsulfone, a phenolformaldehyde novolac resin, a hydrocarbonphenol resin, or a combination thereof.

4. A laminate of claims 1 to 3 which is an electrical laminate.

5. An electrical laminate of claim 4 which is a printed circuit board.

**Patentansprüche**

1. Laminat mit einem Tg von mindestens 150°C, hergestellt durch Härten einer Mischung, enthaltend
   (A) mindestens ein verstärkendes Fasermaterial,
   (B) mindestens ein Epoxyharz und
   (C) mindestens ein Härtungsmittel für Bestandteil (B), unter Verwendung mindestens eines Kohlenwasserstoff-Phenol-Epoxyharzes, halogenierten Kohlenwasserstoff-PhenolEpoxyharzes oder einer Kombination derselben als mindestens einem Teil von Bestandteil (B) in einer solchen Menge, daß mindestens 40% der in Bestandteil (B) vorhandenen Epoxgruppen durch das Kohlenwasserstoff-Phenol-Epoxyharz, halagenierte Kohlenwasserstoff-Phenol-Epoxyharz oder Mischung derselben eingebracht werden,
   **dadurch gekennzeichnet**,
   daß Bestandteil (B)
   ( i) das Produkt, erhalten aus Dehydrohalogenierung des Reaktionsproduktes eines Epihalohydrins und dem Umsetzungsprodukt von Phenol, Cresol oder einer Kombination derselben mit einer Mischung, enthaltend von 70 bis 100 Gew.-% Dicyclopentadien, von Null bis 30 Gew.-% $C_{10}$-Dimere, von Null bis 7 Gew.-% Oligomere von $C_4$-$C_6$ ungesättigten Kohlenwasserstoffen, wobei der Rest, um auf jeden Fall 100 Gew.-% zu ergeben, $C_4$-$C_6$-Alkane, Alkene oder Diene ist,
   ( ii) halogenierte Derivate des Produktes von Bestandteil (i) oder
   (iii) Kombinationen derselben, ist.

2. Laminat nach Anspruch 1,
   **dadurch gekennzeichnet**,
   daß Bestandteil (A) Glasfasern oder ein aromatisches Polyamid und Bestandteil (G) ein Amin, ein Biguanid oder ein phenolisches Material ist.

3. Laminat nach Anspruch 2,
   **dadurch gekennzeichnet**,
   daß Bestandteil (C) Dicyandiamid, Diamindiphenylsulfon, ein Phenol-Formaldehyd-Novolakharz, ein Kohlenwasserstoff-Phenolharz oder eine Kombination derselben ist.

4. Laminat nach Ansprüchen 1 bis 3,
   **dadurch gekennzeichnet**,
   daß es ein elektrisches Laminat ist.

9

**5.** Elektrisches Laminat nach Anspruch 4,
**dadurch gekennzeichnet**,
daß es eine Platte mit gedruckter Schaltung ist.

**Revendications**

**1.** Stratifié ayant une température de transition vitreuse d'au moins 150°C préparé en durcissant une composition comprenant

(A) au moins un produit de renforcement à base de fibres;

(B) au moins une résine époxy; et

(C) au moins un agent de durcissement pour le composant (B);

en employant en tant qu'au moins une partie du composant (B) au moins une résine époxy d'hydrocarbure-phénol, une résine époxy d'hydrocarburephénol halogénée ou leur combinaison en une quantité telle que ladite résine époxy d'hydrocarbure-phénol, la résine époxy d'hydrocarbure-phénol halogénée ou leur combinaison constituent au moins 40 pourcent des groupes époxy présents dans le composant (B), caractérisé en ce que le composant (B) est

(i) le produit résultant de la déshydrohalogénation du produit réactionnel d'une épihalogénohydrine et le produit résultant de la réaction du phénol, du crésol ou leur combinaison avec une composition comprenant de 70 à 100 pourcent en poids de dicyclopentadiène, de zéro à 30 pourcent en poids de dimères en $C_{10}$, de zéro à 7 pourcent en poids d'oligomères d'hydrocarbures insaturés en $C_4$ à $C_6$ et le complément à 100 pourcent en poids, si nécessaire, d'alcanes en $C_4$ à $C_6$, d'alcènes ou de diènes;

(ii) les dérivés halogénés du produit (i) ; ou

(iii) leurs combinaisons.

**2.** Stratifié selon la revendication 1, dans lequel le composant (A) est une fibre de verre ou un polyamide aromatique; et le composant (C) est une amine, un biguanide ou un produit phénolique.

**3.** Stratifié selon la revendication 2, dans lequel le composant (C) est un dicyanodiamide, un diaminodiphénylsulfone, une résine novolac de phénolformaldéhyde, une résine d'hydrocarbure-phénol, ou une combinaison de ceux-ci.

**4.** Stratifié selon les revendications 1 à 3, qui est un stratifié électrique.

**5.** Stratifié électrique selon la revendication 4, qui est une carte de circuits imprimés.